(19) Europäisches Patentamt
European Patent Office
Office européen des brevets

(11) **EP 1 499 416 B1**

(12) **EUROPÄISCHE PATENTSCHRIFT**

(45) Veröffentlichungstag und Bekanntmachung des Hinweises auf die Patenterteilung:
**05.09.2007  Patentblatt 2007/36**

(51) Int Cl.:
**B01D 36/04** *(2006.01)*     **B01D 50/00** *(2006.01)*
**B01D 61/00** *(2006.01)*     **B01D 65/08** *(2006.01)*

(21) Anmeldenummer: 03746836.0

(22) Anmeldetag: **22.04.2003**

(86) Internationale Anmeldenummer:
**PCT/EP2003/004165**

(87) Internationale Veröffentlichungsnummer:
**WO 2003/089111 (30.10.2003 Gazette 2003/44)**

(54) **FILTERVORRICHTUNG MIT INTEGRIERTER ZENTRIFUGALABSCHEIDUNG**

FILTER DEVICE COMPRISING INTEGRAL CENTRIFUGAL SEPARATION

DISPOSITIF DE FILTRATION A SYSTEME DE SEPARATION PAR CENTRIFUGATION INTEGRE

(84) Benannte Vertragsstaaten:
**AT BE BG CH CY CZ DE DK EE ES FI FR GB GR HU IE IT LI LU MC NL PT RO SE SI SK TR**

(30) Priorität: **22.04.2002  DE 10217967**

(43) Veröffentlichungstag der Anmeldung:
**26.01.2005  Patentblatt 2005/04**

(73) Patentinhaber: **NFT Nanofiltertechnik Gesellschaft mit beschränkter Haftung 80802 München (DE)**

(72) Erfinder: **HOFMANN, Wilfried 80802 München (DE)**

(74) Vertreter: **von Bülow, Tam et al Patentanwaltskanzlei Rotbuchenstrasse 6 81547 München (DE)**

(56) Entgegenhaltungen:
FR-A- 1 433 427          US-A- 4 368 118
US-A- 5 352 256          US-A- 5 500 134

EP 1 499 416 B1

**Beschreibung**

Die Erfindung bezieht sich auf eine Filtervorrichtung zur Filterung von Fluiden gemäß dem Oberbegriff des Patentanspruches 1.

Eine solche Filtervorrichtung ist aus der DE 72 25 662 U1 bekannt. Diese Vorrichtung weist eine Filtermembran und einen stromaufwärts der Filtermembran angeordneten Hauptkörper auf, der einen senkrecht zur Oberfläche der Filtermembran verlaufenden Zufuhrkanal und einen zwischen sich und der Filtermembran verlaufenden Spalt zur Bildung einer tangential gerichteten Querströmung sowie einen Rückführkanal aufweist. Dort wird im wesentlichen eine Tangential- oder Querstromfiltration durchgeführt.

Dabei stellt sich das Problem, aus dem mit den unerwünschten Komponenten, wie z.B. Partikel, Mikroorganismen, chemische Stoffe, wie Öle und dergleichen, angereicherten Fluid, diese Komponenten zu entfernen. Hierzu ist es allgemein bekannt, Separatoren unter Ausnutzung der Zentrifugalkraft zu verwenden oder eine einfache Sedimentierung. Zentrifugen haben einen aufwendigen Aufbau, stellen wegen der erforderlichen hohen Zentrifugalbeschleunigungen hohe Anforderungen an das Material und die Fertigungspräzision und sind daher teuer, störanfällig und wartungsintensiv.

Die Sedimentierung erfordert für einen hohen Abscheidungsgrad einerseits große Volumina und andererseits eine relativ große Zeitdauer.

Die US 5,183,569 A1 zeigt ebenfalls eine Filtervorrichtung mit einer Filtermembran, bei der das angereicherte Fluid in einem geschlossenen Kreislauf umgewälzt wird.

Die US-A-5,500,134 zeigt eine Filtervorrichtung mit zwei zylindrischen, koaxial zueinander angeordneten Kammern, von denen die innere ein poröses Filterelement aufweist. Zu behandelnde Flüssigkeit wird tangential in die äußere Kammer geleitet. Eine Trennwand zwischen innerer und äußerer Kammer hat axial verlaufende Schlitze, durch die Fluid bei seiner Tangentialbewegung in die innere Kammer gelangen kann.

Die Kombination aus Zyklon und Filter ohne bewegliche Teile ist auch aus der US-A-4,368,118 und US-A-5,352,256 und FR-A-1,433,427 bekannt.

Um einen hohen Durchsatz zu erzielen, werden beispielsweise Zentrifugen im Parallelbetrieb oder sog. Separatoren verwendet. Die Separatoren bestehen aus großen dichten Behältern, in denen zahlreiche dünne Platten unter einem Winkel zur Symmetrieachse des Behälters übereinander parallel beabstandet sind. Diese Platten werden mit hohen Drehzahlen (bis 6000 UPM) rotiert. Der Innenraum wird über einen Zulauf gefüllt und aufgrund der schnellen Rotation der Platten und der damit einhergehenden Entmischung werden Fluidkomponenten unterschiedlicher Dichte getrennt, so daß die schwereren Komponenten längs der geneigten Platten nach unten und die leichteren Komponenten nach oben abgelenkt werden, wo sie jeweils abgeleitet werden.

Aufgabe der vorliegenden Erfindung ist es, die bekannten Filtervorrichtungen dahingehend zu verbessern, daß eine weitestgehend kontinuierliche Entnahme der abzutrennenden bzw. zu entsorgenden Fluidkomponenten möglich ist, wobei die Filtervorrichtung weitestgehend wartungsfrei arbeitet und einfach aufgebaut ist. Weiter sollen möglichst keine beweglichen Komponenten benötigt werden.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung besteht darin, rings um den Umfangsrand der Filtermembran einen Umlaufkanal vorzusehen, in welchem die Trennung von Fluidkomponenten unterschiedlicher Dichte unter Ausnutzung der Zentrifugalbeschleunigung erfolgt. Es sind Mittel vorgesehen, die dem Fluid im Umlaufkanal eine Kreisbewegung um die Mittelachse aufprägen. Der Einlaß des Umlaufkanales ist an den Abfluß von der Filtermembran und der Auslaß für abgereichertes Fluid an den Rückführkanal angeschlossen. Weiter weist der Umlaufkanal eine Öffnung für angereichertes Fluid auf.

Vorzugsweise hat der Umlaufkanal einen Trapezquerschnitt und verjüngt sich entgegen der senkrecht gegen die Filtermembran gerichteten Hauptstromrichtung. Als Querschnitt kommen aber auch eine Ellipse, ein Kreis, ein Rechteck oder ein Ringkonus in Frage. Auch kann der Umlaufkanal in Form eines Wendels ausgebildet sein, wodurch der von dem Fluid zu durchlaufende Weg vergrößert wird.

Als Mittel für die Aufprägung der Kreisbewegung der Flüssigkeit im Umlaufkanal kommen Düsen in Betracht, deren Auslaßöffnung in Tangentialrichtung ausgerichtet ist. Für die Einleitung und/oder Unterstützung der Kreisbewegung können auch herkömmliche Pumpen, einfache Flügelräder oder ähnliches verwendet werden. Bei Verwendung der Düsen wird die Kreisbewegung, wenn sie einmal gestartet ist, im-wesentlichen nicht durch rotierende oder andere bewegliche Elemente aufrechterhalten. Auch die Rückführung kann ohne Pumpen oder sonstige bewegliche Elemente durchgeführt werden, indem im Bereich der Einmündung des Rückführkanales in den Zufuhrkanal eine Strömungsverengung vorgesehen wird, die einen Unterdruck erzeugt und damit eine Saugwirkung für die Rückführung.

Im folgenden wird die Erfindung anhand von Ausführungsbeispielen im Zusammenhang mit der Zeichnung ausführlicher erläutert. Es zeigt:

Fig. 1 einen Querschnitt der Filtervorrichtung nach einem ersten Ausführungsbeispiel der Erfindung;

Fig. 2 einen Querschnitt ähnlich Fig. 1 nach einem zweiten Ausführungsbeispiel der Erfindung mit trapezförmigem Querschnitt des Umlaufkanals;

Fig. 3 einen Schnitt längs der Linie A-A der Fig. 2;

Fig. 4 eine Darstellung einer Düse für die Zufuhr von Fluid in den Umlaufkanal;

Fig. 5 einen Querschnitt einer Filtervorrichtung mit einem wendelförmigen Umlaufkanal.

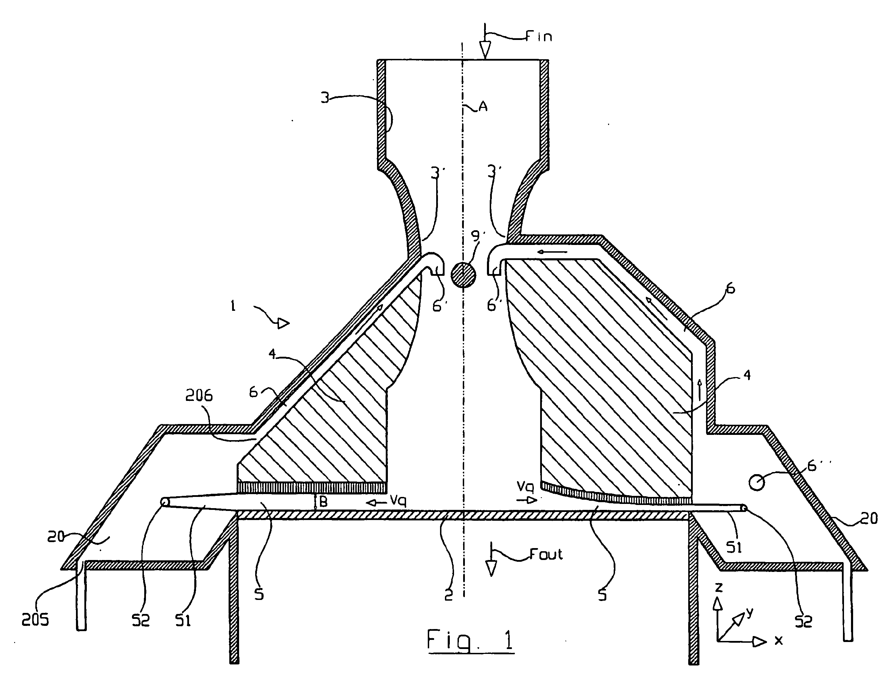

Fig. 1 zeigt eine Filtervorrichtung 1 mit einer Filtermembran 2, der über einen Zufuhrkanal 3, der senkrecht zur Oberfläche der Filtermembran 2 steht, ein zu filterndes Fluid zugeführt wird. Das Fluid ist normalerweise eine mit Feststoffen verunreinigte Flüssigkeit. Es kann aber auch ein mit Feststoffen verunreinigtes Gas sein. In Strömungsrichtung (vgl. Pfeil $F_{in}$) vor der Filtermembran 2 ist ein Hauptkörper 4 angeordnet, der einerseits den Zufuhrkanal 3 fortführt und damit auch bildet und im wesentlichen parallel zur Filtermembran 2 eine seitlich sich über den Zufuhrkanal 3 hinaus erstreckende Kontur hat, die in geringem Abstand B zur Filtermembran läuft und damit einen Spalt 5 bildet. Dieser Spalt hat im linken Teil der Fig. 1 eine konstante Breite B, während er sich im rechten Teil der Fig. 1 von der Mitte aus nach außen hin verkleinert, wodurch eine Düsenwirkung entsteht.

Im Bereich des Querschnittes des Zufuhrkanals 3 gelangt das Fluid im wesentlichen mit einer senkrecht zur Oberfläche der Filtermembran 2 verlaufenden Geschwindigkeitskomponente auf diese. Ein wesentlicher Teil der Strömung wird dann durch den Spalt 5, der als Querkanal dient, parallel zur Oberfläche der Filtermembran 2 geleitet, wie durch die Pfeile $V_q$ (für Quergeschwindigkeit) dargestellt ist. Der Querkanal 5 geht in mindestens einen Rohrstutzen 51 über, dessen freies Ende zu einer Austrittsdüse 52 geformt ist und in Tangentialrichtung (vgl. Richtung y) abgebogen ist. Der Rohrstutzen 51 mit der Austrittsdüse 52 mündet in einen Umlaufkanal 20, der rings um den Außenumfang der Membran 2 angeordnet ist. Bei der Filterung ist der Umlaufkanal 20 vollständig mit Fluid gefüllt, das aufgrund der beschriebenen Ausrichtung der Austrittsdüse 52 eine Kreisbewegung um die Mittelachse A macht. Am entgegen der Hauptstromrichtung $F_{in}$ gelegenen oberen Ende des Umlaufkanals 20 ist ein Rückführkanal 6 angeschlossen, der das aus dem Umlaufkanal 20 stammende Fluid zurück in den Zufuhrkanal 3 leitet. Das in den Zufuhrkanal 3 mündende Ende des Rückführkanals 6 ist als Rohrende 6' ausgeführt, das in Richtung zur Filtermembran 2 hin abgebogen ist, so daß das zurückgeführte Fluid parallel zur Hauptströmung wieder in den Zufuhrkanal gelangt. Im dargestellten Ausführungsbeispiel hat der Zufuhrkanal 3 eine Verengung 3', wobei die engste Stelle vorzugsweise im Bereich des Austritts der Rohrenden 6' des Rückführkanals 6 liegt. Durch diese Verengung tritt in diesem Bereich eine höhere Strömungsgeschwindigkeit auf und damit eine Druckabsenkung, so daß der Druck am Austrittsende des Rückführkanals kleiner ist als an der Oberfläche der Filtermembran 2 bzw. im Umlaufkanal 20. Zusätzlich bewirken auch die in den Zufuhrkanal 3 hineinragenden Rohrenden 6' eine Querschnittsverengung, was den beschriebenen Effekt unterstützt.

Alternativ oder kumulativ zu der Querschnittsverengung 3' können im Bereich der Austrittsöffnung 6' des Rückführkanals 6 auch Einsatzstücke 9' angeordnet sein, die beispielsweise die Form eines sphärischen Körpers haben, der ebenfalls als Strömungsverengung dient.

Alternativ oder kumulativ kann wirkungsmäßig auch eine Pumpe 6'' vorgesehen sein, die die Rückförderung bewirkt.

Bezogen auf ein in der rechten unteren Ecke der Fig. 1 dargestelltes karthesisches Koordinatensystem strömt das Fluid in Richtung des Pfeiles $F_{in}$ in Richtung der negativen Z-Achse parallel zur Symmetrieachse A auf die Anströmseite der Filtermembran. Dabei wird auf der Anströmseite der Filtermembran 2, insbesondere aber nicht ausschließlich in deren Mitte eine turbulente Strömung erzeugt, die eine Anlagerung von durch die Membran zurückgehaltenen Stoffen auf der Anströmseite zumindest verlangsamt. Außerdem wird parallel zur Membran 2 im Spalt 5 eine Strömung mit höherer Querstromgeschwindigkeit $v_q$ erzeugt, welche die zurückgehaltenen Stoffe entlang der Anströmseite der Membran parallel zur x-Richtung transportiert. Die Querströmung im Spalt 5 ist vorzugsweise turbulent, wodurch eventuell auf der Membran befindliche Stoffe von ihr aufgewirbelt und mit der Querströmung abtransportiert werden. Das so angereicherte Fluid gelangt dann über die Rohrstutzen 51 zur Austrittsdüse 52 in den Umlaufkanal 20, wo die zurückgehaltenen Stoffe aufgrund der Zentrifugalwirkung entnommen bzw. von dem Fluid abgetrennt werden und die von den zurückgehaltenen Stoffen im wesentlichen befreite Querströmung durch den Rückführkanal 6 auf der Einströmseite in den Hauptstrom, d.h. den Zufuhrkanal 3 zugeleitet wird. Auf diese Weise erfolgt eine Reinigung der Membran und ein Abtrennen der zurückgehaltenen Stoffe ohne Unterbrechung des Filtrationsvorganges.

Der Querschnitt des Rohrstutzens 51 nimmt vom Rand der Membran 2 bis zur Austrittsdüse 52 ab, wodurch die Fluidgeschwindigkeit im Rohrstutzen 51 zunimmt. Das Verhältnis der Fluidgeschwindigkeiten am Eingang in den Rohrstutzen und an der Düsenöffnung ist bestimmt durch das reziproke Verhältnis der jeweiligen Querschnittsflächen. Auf diese Weise kann eine hohe Fluidgeschwindigkeit an der Austrittsdüse 52 erreicht werden.

Wie sich aus der bekannten Beziehung für die Zentrifugalbeschleunigung a

$$a = v^2/r$$

ergibt, können bei geeigneter Wahl der Parameter (r = Radius und v = Umlaufgeschwindigkeit) sehr hohe Zentrifugalbeschleunigungen (bis >100g) erreicht werden.

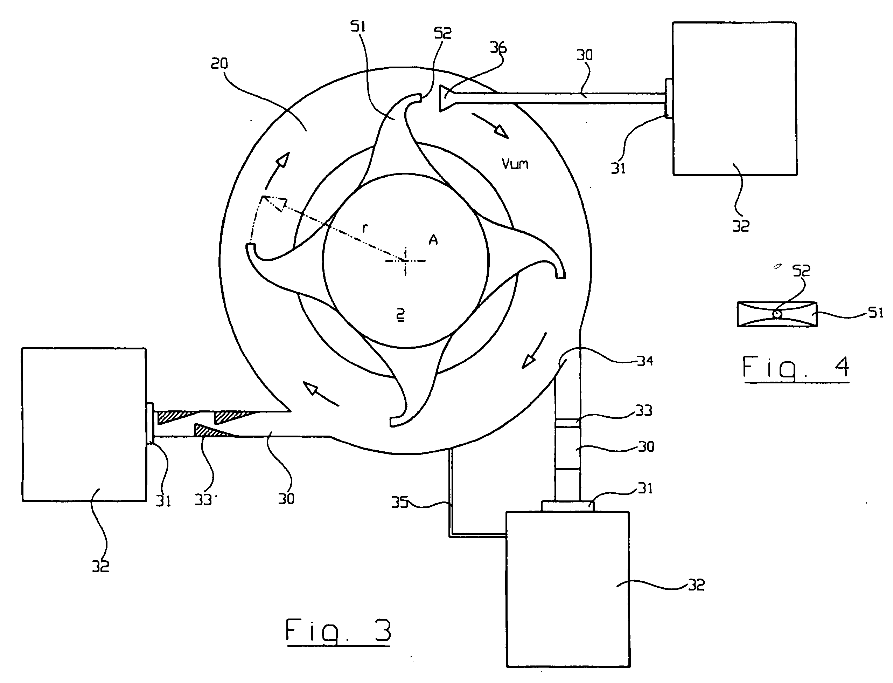

Eine Möglichkeit, die Geschwindigkeit v an der Austrittsdüse 52 zu erhöhen, besteht darin, den Kanal in mindestens einer Richtung zu verengen (vgl. Fig. 4).

Aus der Kontinuitätsgleichung der Fluiddynamik (unter der Annahme inkompressibler oder nahezu inkompressibler Fluide) ergibt sich, daß das Verhältnis der Geschwindigkeit ($v_g$) auf der Anströmseite der Membran 2 und der Geschwindigkeit ($v_{um}$) am Ausgang der Austrittsdüse 52 im wesentlichen gleich dem reziproken Verhältnis der zur Fluidströmung senkrechten Querschnittsflächen ist. In einem Zahlenbeispiel (r=18cm; H=0,5cm; C=25,0cm; Düsendurchmesser D=0,5mm) ergibt sich:

$$v_{um}/v_g \ = \ 12,5/0,2 \ = \ 60$$

Beträgt $v_q$ beispielsweise nur 1 m/s, ergäbe sich eine Düsenaustrittsgeschwindigkeit $v_{um}$ von ca. 60 m/s. Durch entsprechendes Einstellen der Parameter kann somit eine ausreichende Geschwindigkeitskomponente in tangentialer Richtung aufgeprägt werden, so daß für eine ausreichende Separation der Fluidkomponenten ein "Umlauf" genügt.

Im stationären Betriebszustand der Filtervorrichtung können die Kreisbewegung im Umlaufkanal und die Rückführung des abgereicherten Fluids durch den Rückführkanal 6 allein durch die Hauptströmung $F_{in}$ und die Strömungsverengung 3' aufrechterhalten werden, sofern die Hauptströmung, die normalerweise durch eine Pumpe angetrieben wird, eine gewisse Mindestgeschwindigkeit hat. Für die Inbetriebnahme der Filtervorrichtung und zum Aufbau der Kreisbewegung im Umlaufkanal 20 sind noch zusätzliche Mittel 6" vorgesehen, die dem Fluid im Umlaufkanal eine Kreisbewegung aufprägen. Es kann sich hierbei um eine Pumpe handeln, ein Flügelrad oder ein sonstiges bekanntes, eine Flüssigkeit in Bewegung setzendes Bauelement, das auch nach Inbetriebnahme der Filtervorrichtung in Betrieb bleiben kann.

Die Trennung der Fluidkomponenten im Umlaufkanal 20 erfolgt in erster Linie aufgrund der Zentrifugalwirkung. Für den Umlaufkanal bieten sich mehrere Ausgestaltungen an, die weiter unten beschrieben werden. Im Ausführungsbeispiel der Fig. 1 hat der Umlaufkanal den beschriebenen Trapezquerschnitt.

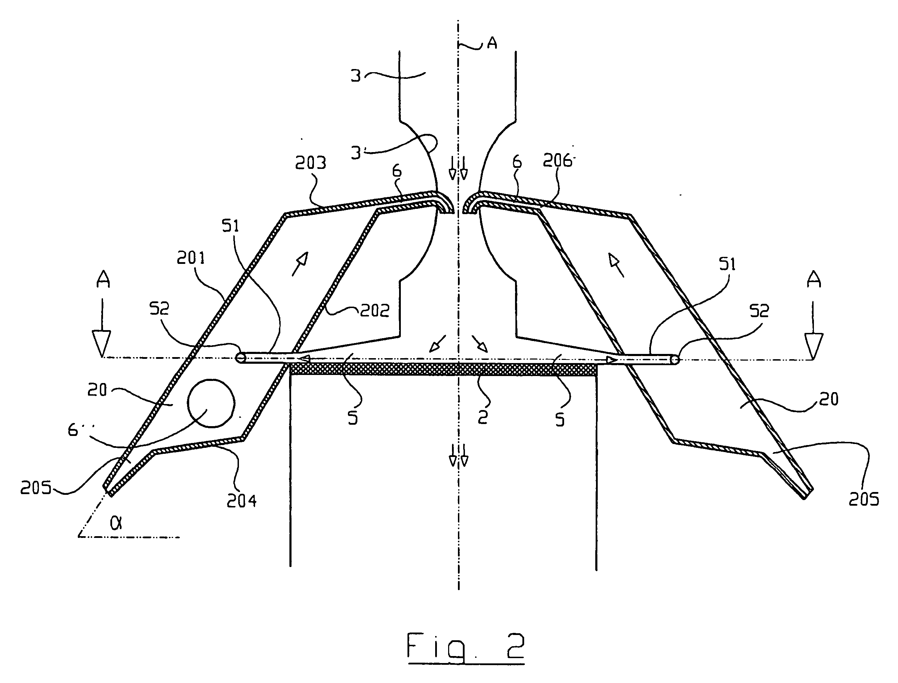

Im Ausführungsbeispiel der Fig. 2 hat der Umlaufkanal ebenfalls im wesentlichen einen Trapezquerschnitt, der durch konisch geformte, parallel zueinander liegende Scheiben 201 und 202 gebildet wird, die unter einem Winkel α gegen die Membran 2 geneigt sind und rotationssymmetrisch um die Mittelachse A verlaufen. Am oberen und unteren Ende sind die Scheiben 201 und 202 durch weitere Scheiben 203, 204 abgedichtet miteinander verbunden, so daß ein geschlossener Raum gebildet wird, der dem Umlaufkanal 20 entspricht. Am oberen Ende, wo die Scheiben 202 und 203 miteinander verbunden sind, befinden sich ein oder mehrere Rohrstutzen, die die Funktion des Rückführkanals 6 übernehmen. Statt Rohrstutzen können auch ringförmige Platten verwendet werden, so daß sich ein umlaufender Schlitz für die Rückführung ergibt. Am unteren Ende sind die beiden Scheiben 201 und 202 durch eine entsprechende Scheibe 204 miteinander verbunden, wobei ein oder mehrere Auslaßstutzen 205 an der Verbindungsstelle zwischen den Scheiben 201 und 204 vorgesehen sind, an denen das stark angereicherte Fluid abgeführt werden kann. An diesen Stutzen kann ein Absperrventil (nicht dargestellt) angeordnet sein.

Bewegt sich das Fluid im Umlaufkanal 20 mit der Geschwindigkeit $v_{tan}$ in einer Kreisbewegung um die Achse A, wird aufgrund der Zentrifugalbeschleunigung die schwerere Fluidkomponente zur Scheibe 201 befördert und wandert dort aufgrund der Neigung α nach unten in Richtung auf die Scheibe 204 und zum Auslaßstutzen 205. Die leichtere Komponente wandert aufgrund der Neigung α nach oben in Richtung zur Scheibe 203 und gelangt dort über den Rückführkanal 6 wieder über den Zufuhrkanal 3 zur Membran 2. Die schwerere Komponente wird an dem Stutzen 205 in Sammelbehältern aufgefangen und entsorgt.

Die Draufsicht der Fig. 3 zeigt den Umlaufkanal 20 und die sich verengenden Rohrstutzen 51 mit den Austrittsdüsen 52, die tangential abgebogen sind, um die Kreisströmung mit der Geschwindigkeit $v_{um}$ zu bewirken. Es sind hier vier gleichmäßig um den Umfang verteilt angeordnete Austrittsdüsen 52 vorgesehen.

Fig. 3 zeigt weiterhin, daß die Anreicherung bzw. Aufkonzentrierung der zu entnehmenden Stoffe in gesonderten Bereichen, Behältern oder Zonen stattfinden kann. Hierzu wird im Umlaufkanal 20 die Strömung so geführt, daß sich Totzonen ergeben, die während der laufenden Filtration vom Umlaufkanal 20 getrennt, entleert und anschließend wieder mit dem Umlaufkanal verbunden werden. Eine Form dieser Totzone besteht in einem vom Umlaufkanal 20 tangential abgehenden Rohr 30, das einen kleineren Durchmesser als der Ringkanal hat und das über einen lösbaren Flansch 31 mit einem Sammelbehälter 32 verbunden ist, der der erwähnten Totzone entspricht. In dem Rohr 30 können Strömungshindernisse 33 eingebaut sein, die eine Rückströmung vom Sammelbehälter 32 zum Umlaufkanal 20 erschweren. Als Strömungshindernis kann beispielsweise eine Schikane 33' mit rampenförmigen Vorsprüngen verwendet werden oder auch ein grobmaschiges Metallgitter bzw. Sieb. Am Übergang zwischen dem Umlaufkanal 20 und dem Rohr 30 kann auch eine Kante 34 ausgebildet sein, die die Strömung im Umlaufkanal separiert.

Aus Gründen der Druckverteilung im gesamten Rohrsystem können am jeweiligen Sammelbehälter 32 Druckausgleichsverbindungen 35 zurück zum Umlaufkanal 20 vorgesehen sein, die einen im vergleich zum Rohr 30 kleinen Durchmesser haben. Natürlich sind auch diese Leitungen 35 vom Sammelbehälter 32 trennbar durch entsprechende Kupplungen und/oder Absperrventile.

Bei einer weiteren Ausführungsform ist die Zuleitung in den jeweiligen Sammelbehälter in Form einer Düse 36, deren Einlaß-/Querschnittsfläche senkrecht zur Anströmung steht, ausgebildet. Die Austrittsdüsen 52, aus denen das Fluid von der Membran her austritt, können dabei diesen Düsen 36 zugeordnet werden, wobei auch bei dieser Ausführungsform im Rohr 30 Strömungshindernisse für die Erschwerung einer Rückströmung vorhanden sein können.

Ziel aller dieser Maßnahmen ist es, die von der Membran 2 zugeführten, zurückgehaltenen Stoffe (mit dem Fluid) mit höherer Rate in den Sammelbehältern 32 anzureichern, als über den Rückführkanal 6 wieder in das die Membran anströmende Fluid gelangen zu lassen. Im stationären Betrieb stellt sich dabei ein Gleichgewicht in dem Sinne ein, daß von den von der Membran zurückgehaltenen und entfernten Stoffen pro Volumeneinheitsfluid deutlich weniger über den Rückführkanal 6 und damit erneut wieder zur Membran gelangen.

Fig. 4 zeigt noch einen Querschnitt der Austrittsdüsen 52, der sich von der Membran nach außen hin verjüngt, zur Erhöhung der Strömungsgeschwindigkeit.

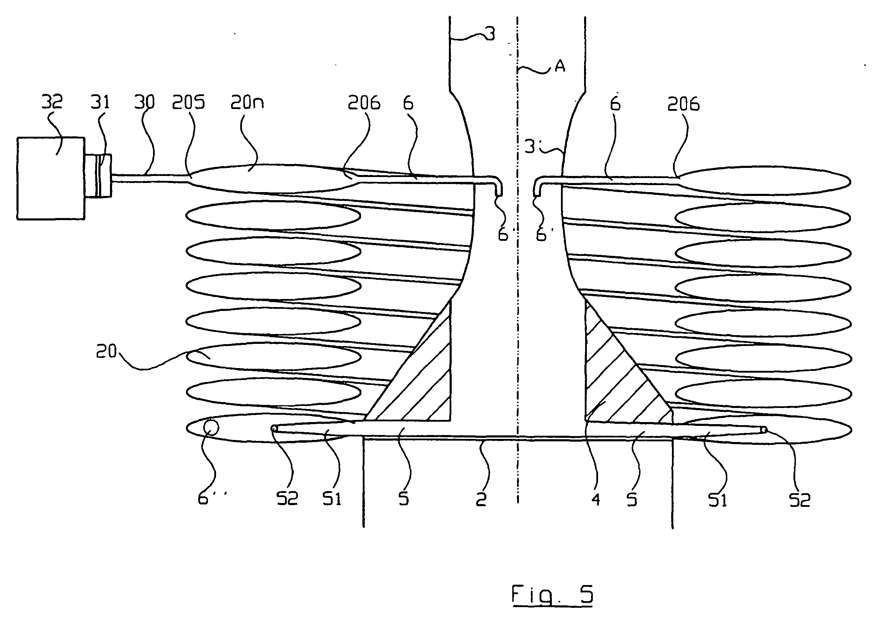

Gemäß dem Ausführungsbeispiel der Fig. 5 kann der Umlaufkanal auch in Form einer Wendel spiralig um die Filtermembran 2 geführt werden, um auf diese Weise die Separationsrate zu erhöhen. Allgemein kann man sagen, daß mit der Anzahl der Ableitungen aus dem Umlaufkanal 20 in den Sammelbehälter 32 und/oder der Anzahl der Wendelstufen die Separationsrate zunimmt, d.h. die zu entfernenden Stoffe zunehmend effizienter entfernt werden.

Bei dem wendelförmigen Umlaufkanal 20 der Fig. 5 ist der Anschluß für die Abfuhr der zu entfernenden Stoffe radial außen am obersten Wendel 20n, wobei auch hier über eine Kupplung mit Absperrventil 31 ein Sammelbehälter 32 angeschlossen ist. Der Rückführkanal 6 ist ebenfalls am obersten Wendel 20n an der radial inneren Seite angebracht, wobei auch hier sowohl mehrere Rückführkanäle 6 und mehrere Sammelbehälter 32 rings um den Umlaufkanal verteilt angeordnet sein können.

**Patentansprüche**

1. Filtervorrichtung zur Filterung von Fluiden mit einer Filtermembran (2), einem stromaufwärts der Filtermembran (2) angeordneten Hauptkörper (4), der einen senkrecht zur Oberfläche der Filtermembran (2) verlaufenden Zufuhrkanal (3) und einen zwischen sich und der Filtermembran (2) verlaufenden Spalt (5) zur Bildung einer tangential gerichteten Querströmung und eine Rückführkanal (6) aufweist, **dadurch gekennzeichnet,** **daß** ein rings um den Umfangsrand der Membran (2) angeordneter Umlaufkanal (20) vorgesehen ist, dessen Einlaß an den Spalt (5) und dessen Auslaß über eine erste Öffnung (206) für abgereichertes Fluid an den Rückführkanal (6) angeschlossen ist, **daß** der Umlaufkanal (20) eine zweite Öffnung (205) für angereichertes Fluid aufweist,

**daß** Mittel (51, 52; 62') vorgesehen sind, die dem Fluid im Umlaufkanal (20) eine Kreisbewegung aufprägen, und **daß** der Rückführkanal (6) mit dem Zufuhrkanal (3) verbunden ist.

2. Filtervorrichtung nach Anspruch 1, **dadurch gekennzeichnet,** **daß** die Öffnung (206) für abgereichertes Fluid an der radial nach innen zur Mittelachse (A) liegenden Seite des Umlaufkanals (20) angeordnet ist und in Strömungshauptrichtung ($F_{in}$) stromaufwärts der Membran (2) liegt.

3. Filtervorrichtung nach einem der Ansprüche 1 oder 2, **dadurch gekennzeichnet,** **daß** die Öffnung (205) für angereichertes Fluid an der radial äußeren Seite des Umlaufkanals (20) angeordnet ist.

4. Filtervorrichtung nach einem der Ansprüche 1 bis 3, **dadurch gekennzeichnet,** **daß** ein Querschnitt eines Abschnittes des Umlaufkanals (20) einen Trapezquerschnitt aufweist, der entgegengesetzt zur Hauptstromrichtung ($F_{in}$) radial einwärts gerichtet ist.

5. Filtervorrichtung nach einem der Ansprüche 1 bis 4, **dadurch gekennzeichnet,** **daß** ein Querschnitt eines Abschnittes des Umlaufkanal (20) den Querschnitt einer Ellipse, eines Kreises, eines Rechteckes oder eines Ringkonus hat.

6. Filtervorrichtung nach einem der Ansprüche 1 bis 5, **dadurch gekennzeichnet,** **daß** der Umlaufkanal (20) wendelförmig ausgebildet ist und sich mit mehreren Windungen um den Zufuhrkanal (3) herum erstreckt.

7. Filtervorrichtung nach einem der Ansprüche 1 bis 6, **dadurch gekennzeichnet,** **daß** das Mittel zur Erzeugung der Kreisbewegung des Fluids im Umlaufkanal mindestens eine Düse (52) ist, deren Austrittsöffnung senkrecht zur Tangentialrichtung des Umlaufkanals (20) steht derart, daß die Tangentialrichtung senkrecht zu einer von der Austrittsöffnung gebildeten Ebene liegt.

8. Filtervorrichtung nach einem der Ansprüche 1 bis 7, **dadurch gekennzeichnet,** **daß** das Mittel zur Erzeugung einer Kreisbewegung im Umlaufkanal eine Pumpe (6") ist.

9. Filtervorrichtung nach einem der Ansprüche 1 bis 8, **dadurch gekennzeichnet,** **daß** der Rückführkanal (6) mit dem Zufuhrkanal (3) an einer Strömungsverengung (3'; 9') des Zufuhrkanals (3) verbunden ist.

**10.** Filtervorrichtung nach einem der Ansprüche 1 bis 9, **dadurch gekennzeichnet,** **daß** an den Umlaufkanal (20) ein Sammelbehälter (32) angeschlossen ist.

**11.** Filtervorrichtung nach Anspruch 10, **dadurch gekennzeichnet,** **daß** der Sammelbehälter (32) mittels einer lösbaren Kupplung (31) an den Umlaufkanal (20) angeschlossen ist.

**12.** Filtervorrichtung nach Anspruch 10 oder 11, **dadurch gekennzeichnet,** **daß** in einer Zuleitung (30) zum Sammelbehälter (32) ein Strömungshindernis (33, 33') angeordnet ist.

**Claims**

**1.** Filter apparatus to filter fluids with a filter membrane (2), a main body (4) located upstream from the filter membrane (2), which has a supply channel (3) running perpendicular to the surface of the filter membrane (2) and a gap (5) running between it and the filter membrane (2) for the formation of a tangentially directed transverse flow, and a return channel (6), **characterized** **in that** a circulation channel (20), located around the circumferential edge of the membrane (2), is provided, whose inlet is connected to the gap (5) and its outlet, via a first opening (206) for depleted fluid to the return channel (6), **in that** the circulation channel (20) has a second opening (205) for loaded fluid, **in that** means (51, 52; 62') are provided, which impart a circular movement to the fluid in the circulation channel (20), and **in that** the return channel (6) is connected with the supply channel (3).

**2.** Filter apparatus according to Claim 1, **characterized** **in that** the opening (206) for depleted fluid is located on the side of the circulation channel (20) lying radially inwards with respect to the middle axis (A) and lies upstream of the membrane (2) in the main flow direction $F_{in}$.

**3.** Filter apparatus according to one of Claims 1 or 2, **characterized** **in that** the opening (205) for loaded fluid is located at the radially outer side of the circulation channel (20).

**4.** Filter apparatus according to one of Claims 1 to 3, **characterized** **in that** a cross-section of a section of the circulation channel (20) has a trapezoid cross-section, which is directed radially inwards, opposite the main flow direction $F_{in}$.

**5.** Filter apparatus according to one of Claims 1 to 4, **characterized** **in that** a cross-section of a section of the circulation channel (20) has the cross-section of an ellipse, a circle, a rectangular, or an annular cone.

**6.** Filter apparatus according to one of Claims 1 to 5, **characterized** **in that** the circulation channel (20) is shaped in the form of a coil and extends, with several windings, around the supply channel (3).

**7.** Filter apparatus according to one of Claims 1 to 6, **characterized** **in that** the means to produce the circular movement of fluid in the circulation channel is at least one nozzle (52), whose exit opening is perpendicular to the tangential direction of the circulation channel (20) in such a way that the tangential direction is perpendicular to a plane formed by the exit opening.

**8.** Filter apparatus according to one of Claims 1 to 7, **characterized** **in that** the means to produce a circular movement in the circulation channel is a pump (6").

**9.** Filter apparatus according to one of Claims 1 to 8, **characterized** **in that** the return channel (6) is connected to the supply channel (3) at a flow constriction (3'; 9') of the supply channel (3).

**10.** Filter apparatus according to one of Claims 1 to 9, **characterized** **in that** a collecting container (32) is connected to the circulation channel (20).

**11.** Filter apparatus according to Claim 10, **characterized** **in that** the collecting container (32) is connected to the circulation channel (20) by means of a detachable coupling (31).

**12.** Filter apparatus according to Claim 10 or 11, **characterized** **in that** a flow hindrance (33, 33') is located in a feed line (30) to the collecting container (32).

**Revendications**

**1.** Dispositif de filtration pour filtrer des fluides, avec une membrane filtrante (2) et avec un corps principal (4) qui est disposé en amont de la membrane filtrante (2) et qui présente un canal d'amenée (3) perpendiculaire à la surface de la membrane filtrante (2), un interstice (5) qui court entre ledit corps principal et la membrane filtrante (2) et sert à la formation d'un écoulement transversal tangentiel, et un canal de retour (6),

**caractérisé en ce que**

l'on prévoit un canal de circulation (20), qui est disposé autour du bord périphérique de la membrane (2) et dont l'entrée est raccordée à l'interstice (5) et la sortie est raccordée au canal de retour (6) par un premier orifice (206) pour fluide appauvri.

le canal de circulation (20) présente un deuxième orifice (205) pour fluide enrichi,

l'on prévoit des moyens (51, 52 ; 62') qui impriment un mouvement circulaire au fluide présent dans le canal de circulation (20),

le canal de retour (6) est relié au canal d'amenée (3).

2. Dispositif de filtration selon la revendication 1, **caractérisé en ce que**

l'orifice (206) pour fluide appauvri est disposé sur la face du canal de circulation (20) située vers l'intérieur dans le sens radial en direction de l'axe médian (A), et se trouve en amont de la membrane (2) dans le sens d'écoulement principal ($F_{in}$).

3. Dispositif de filtration selon la revendication 1 ou 2, **caractérisé en ce que**

l'orifice (205) pour fluide enrichi est disposé sur la face du canal de circulation (20) extérieure dans le sens radial.

4. Dispositif de filtration selon l'une des revendications 1 à 3, **caractérisé en ce que**

une section transversale d'un segment du canal de circulation (20) présente une section trapézoïdale rentrant en dedans dans le sens radial contre le sens d'écoulement principal ($F_{in}$).

5. Dispositif de filtration selon l'une des revendications 1 à 4, **caractérisé en ce que**

une section transversale d'un segment du canal de circulation (20) présente la section d'une ellipse, d'un cercle, d'un rectangle ou d'un cône annulaire.

6. Dispositif de filtration selon l'une des revendications 1 à 5, **caractérisé en ce que**

le canal de circulation (20) est conçu hélicoïdal et décrit plusieurs spires autour du canal d'amenée (3).

7. Dispositif de filtration selon l'une des revendications 1 à 6, **caractérisé en ce que**

le moyen destiné à produire le mouvement circulaire du fluide dans le canal de circulation est au moins une buse (52), dont l'orifice de sortie est perpendiculaire à la direction tangentielle du canal de circulation (20), si bien que la direction tangentielle est perpendiculaire à un plan constitué par ledit orifice de sortie.

8. Dispositif de filtration selon l'une des revendications 1 à 7, **caractérisé en ce que**

le moyen destiné à produire un mouvement circulaire dans le canal de circulation est une pompe (6").

9. Dispositif de filtration selon l'une des revendications 1 à 8, **caractérisé en ce que**

le canal de retour (6) est relié au canal d'amenée (3) à l'endroit où le canal d'amenée (3) présente un étranglement d'écoulement (3' ; 9').

10. Dispositif de filtration selon l'une des revendications 1 à 9, **caractérisé en ce que**

un récipient collecteur (32) est raccordé au canal de circulation (20).

11. Dispositif de filtration selon la revendication 10, **caractérisé en ce que**

le récipient collecteur (32) est raccordé au canal de circulation (20) à l'aide d'un raccord (31) démontable.

12. Dispositif de filtration selon la revendication 10 ou 11, **caractérisé en ce que**

un obstacle à l'écoulement (33, 33') est disposé dans une conduite d'amenée (30) menant au récipient collecteur (32).

Fig. 1

EP 1 499 416 B1

Fig. 2

Fig. 4

Fig. 3

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 7225662 U1
- US 5183569 A1
- US 5500134 A
- US 4368118 A
- US 5352256 A
- FR 1433427 A